# EUROPEAN PATENT APPLICATION

(11) **EP 1 988 722 A1**
(43) Date of publication of application: **05.11.2008**
(21) Application number: 07708241.0
(22) Date of filing: 08.02.2007
(51) Int. Cl.: H04Q 7/22, H04B 7/26

(54) **MOBILE STATION APPARATUS AND BASE STATION APPARATUS**

(30) Priority: 10.02.2006 JP 2006034124
(71) Applicant: Sharp Kabushiki Kaisha, Osaka-shi, Osaka 545-8522 (JP)
(72) Inventor: KATO, Yasuyuki, Chiba-shi, Chiba-ken (JP); SHITARA, Shoichi, Chiba-shi, Chiba-ken (JP); KUBOTA, Minoru, Chiba-ken (JP)
(74) Representative: Müller - Hoffmann & Partner
(86) International application number: PCT/JP2007/052257
(87) International publication number: WO 2007/091649

(57) **Abstract**

A mobile station device includes a mode determining unit that determines two modes that are a normal mode in which the mobile station device is in a normal state of communication with a base station device and a measurement mode in which the mobile station device communicates with the base station device or monitors a base station device to be a handover target. The mobile station device is **characterized in that** the mode determining unit determines whether or not to set the normal mode or the measurement mode based on a channel quality indication threshold and a channel quality indication characteristic at a frequency being used for the communication.

## Description

### TECHNICAL FIELD

The present invention relates to a mobile station device and a base station device, and particularly, to a mobile station device and a base station device that execute handover between cells belonging to the same radio access technology or different radio access technologies.
Priority is claimed on Japanese Patent Application No. 2006-34124, filed February 10, 2006, the content of which is incorporated herein by reference.

### BACKGROUND ART

In the cellular mobile communication system of the same RAT (radio access technology), multiple base station devices are dispersed in a service area, each base station device forms a radio area called a cell, and a mobile station device is connected through a radio channel to the base station device in the cell where the mobile station device is present, thereby implementing radio communication.
In addition, when the mobile station device moves to another cell during communication, HO (handover) is executed to continue the communication in the different cell.

The handover includes Intra-Freq-HO (Intra Frequency Handover) that is a handover between the same frequencies executed when the mobile station device moves between the cells to which the same radio frequencies are allocated, Inter-Freq-HO (Inter Frequency Handover) that is a handover between different frequencies executed when the mobile station device moves between the cells to which different radio frequencies are allocated.
In the cellular mobile communication systems of different wireless access technologies, there is Inter-RAT-HO (Inter RAT Handover) that is a handover between different radio access technologies executed when the mobile station device moves between the cells utilizing different radio access technologies. On the other hand, there is Intra-RAT-HO (Intra RAT Handover) that is a handover between the cells utilizing the same radio access technology.

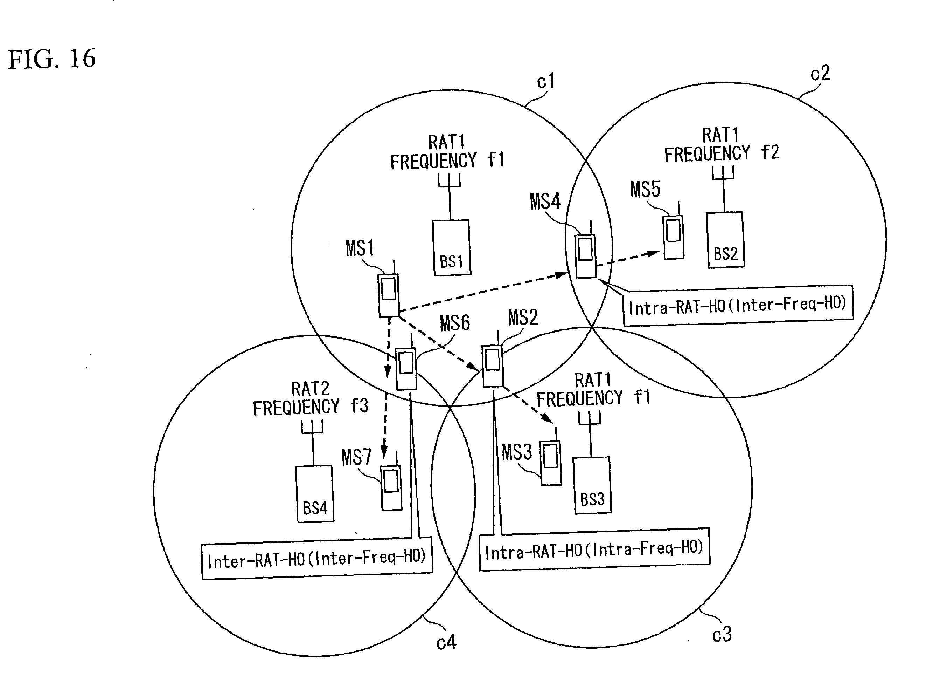

FIG. 16 is a schematic view showing handover processing when the mobile station device moves. Each base station device BS1, BS2, BS3, and BS4 is disposed on a two-dimensional plane. The base station devices BS1, BS2, BS3, and BS4 execute radio communication with mobile station devices using frequencies f1, f2, f1, and f3, respectively. The base station devices BS1, BS2, BS3, and BS4 execute the radio communication with the mobile station devices using radio access technologies RAT1, Rate, RAT1, and RAT2, respectively.
The base station devices BS1, BS2, BS3, and BS4 can execute radio communication with mobile station devices MS1, MS2, MS4, and MS6, mobile station devices MS4 and MS5, mobile station devices MS2 and MS3, and mobile station devices MS6 and MS7, which are located in cells c1, c2, c3, and c4 that are radio-communication available areas.

The mobile station device MS4 moving between the cells c1 and c2 executes Intra-RAT-HO (and Inter-Freq-HO). The mobile station device MS2 moving between the cells c1 and c3 executes Intra-RAT-HO (and Intra-Freq-HO). The mobile station device MS6 moving between the cells c1 and c4 executes Inter-RAT-HO (and Inter-Freq-HO).

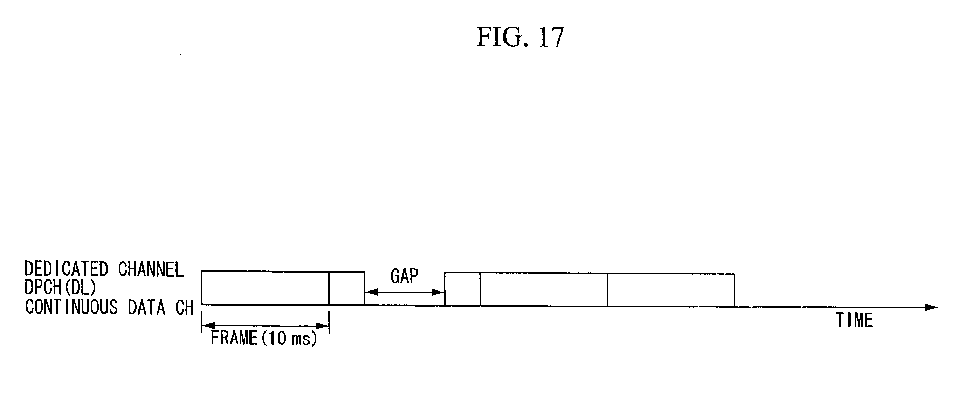

Conventionally, for example, the radio access technology of W-CDMA (Wideband Code Division Multiple Access) defined by 3GPP (3rd Generation Partnership Project) has been standardized as the third-generation cellular-mobile-communication method, and services thereof have started sequentially (see non-patent document 1). In the W-CDMA system, a compressed mode is defined as a function of monitoring or measuring a base station device utilizing a different frequency upon Intra-RAT-HO (and Inter-Freq-HO) or Inter-RAT-HO (and Inter-Freq-HO). In other words, according to the compressed mode, the base station device sets a gap section as shown in FIG. 17 that is a transmission intermission and suspends data transmission over DPCH (Dedicated Physical Channel) at the gap section. FIG. 17 shows an example of the dedicated channel transmitted from the base station device to the mobile station device. On the other hand, the mobile station device switches the frequency using the period of the gap section and monitors the base station device utilizing the different frequency.

In 3GPP, HSDPA (High Speed Downlink Packet Access) that implements high-speed downlink packet transmission of approximate maximum transmission speed of 14. 4 Mbps that is the expansion of the W-CDMA radio interface is standardized (see non-patent document 2). In the downlink, HS-SCCH (High Speed Shared Control Channel) and HS-PDSCH (High Speed-Physical Downlink Shared Channel) are additionally defined as individual channels different from the dedicated channel to which the compressed mode is normally applied. In the uplink, HS-DPCCH (High Speed Dedicated Physical Control Channel) is defined additionally.

AMCS (Adaptive Modulation and Coding Scheme) is adopted in the high-speed downlink access technology of HSDPA. The AMCS is a method in which radio transmission parameters, such as the data-modulation multiple-value number of the shared data channel, an error correcting method, an error-correction encoding ratio, the data-modulation multiple-value number, an code spreading factor of time and frequency axes, and the multi-code multiplexed number are switched according to a downlink CQI (Channel Quality Indication) which is a propagation channel condition of each mobile station device to efficiently execute high-speed packet-data transmission. Additionally, HARQ (Hybrid Automatic Repeat reQuest) is adopted. ACK/NACK (Acknowledgement/Negative Acknowledgement) which is received transmittal confirmation information, and the CQI are fed back to the base station device over the dedicated control channel.

When the compressed mode is applied in DPCH of W-CDMA and the monitoring (measuring) of the different frequency/base station device is executed, data transmission to/from the base station device cannot be executed over the downlink shared data channel HS-PDSCH. Therefore, allocation of packet data addressed to a desired mobile station device is not executed for a HS-PDSCH section corresponding to a gap section in which the monitoring of the different frequency/base station device is executed. Before the gap section is generated, the base station device side instructs the mobile device side to suspend the data allocation of HS-PDSCH using HS-SCCH. The mobile station device that has received the instruction generates a gap section shown in FIG. 17 as explained above, and monitors (measures) the different frequency/the base station device.

Further, EUTRA (Evolved Universal Terrestrial Radio Access) and EUTRAN (Evolved Universal Terrestrial Radio Access Network) are under consideration.
OFDMA (Orthogonal Frequency Division Multiplexing Access) is proposed as EUTRA downlink. The AMCS technology is applied to the OFDMA system as the EUTRA technology (see non-patent documents 3 and 4).
A downlink radio-frame configuration and a radio-channel mapping method are proposed in EUTRA (see non-patent document 4).

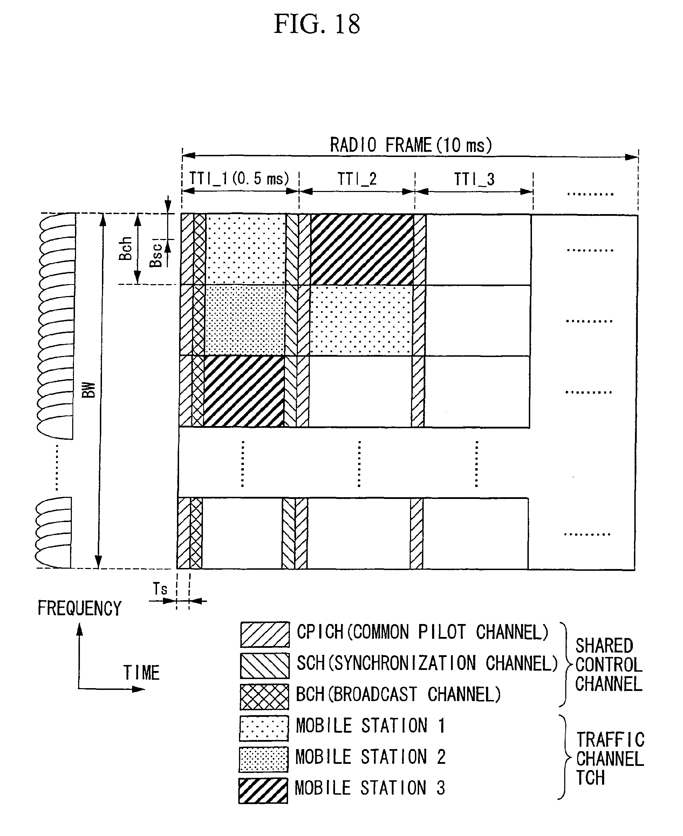

FIG. 18 shows an example of a downlink radio-frame configuration and a radio-channel mapping method in E-UTRA based on the proposal of 3GPP. The downlink radio frame is a bundle of subcarriers along the frequency axis, and includes two-dimensional radio RBs (resource blocks) defined by a frequency bandwidth Bch and a TTI (Transmission Timing Interval) in the time axis. BW, Bch, Bsc, and Ts represent a downlink frequency bandwidth, a resource block RB frequency bandwidth, a subcarrier frequency bandwidth, and an OFDM symbol length, respectively.

As shown in FIG 18, a common pilot channel CPICH is mapped to the head of each sub-frame interval TTI, and a broadcast channel BCH and a synchronization channel SCH are mapped to the head sub-frame interval of each radio frame. A rest part of each resource block RB is used as a traffic channel TCH, and mapped to each mobile station device (mobile station devices 1, 2, and 3) using AMCS.
As a gap control method for monitoring (measuring) the different frequency/base station device upon Intra-RAT-HO (and Intra-Freq-HO) that is a handover between the same radio access technology of EUTRA/EUTRAN and Inter-RAT-HO (and Inter-Freq-HO) that is a handover between different radio access technologies, a gap control method based on a signaling control by the base station device and the mobile station device and the autonomous gap control method based on measuring an instantaneous CQI sample and feedback to the base station device that are executed by the mobile station are proposed similar to HSDPA (see non-patent document 5).

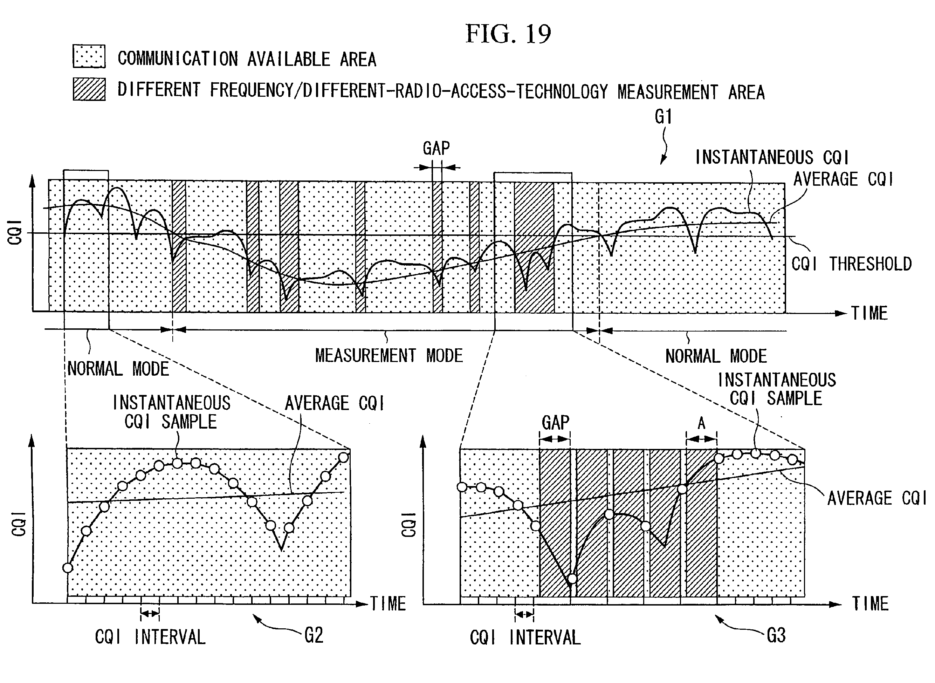

A graph G1 shown in FIG. 19 denotes the autonomous gap control method. The mobile station device receives CPICH, measures an instantaneous CQI at a given interval (CQI Interval), and reports the measured instantaneous CQI to the base station device. At the same time, the mobile station device calculates an average CQI by averaging the instantaneous CQIs at a given period (system parameter). The mobile station device compares the average CQI with a CQI threshold of the system parameter. When the average CQI is greater than the CQI threshold, the mobile station device sets an NM (normal mode). When the average CQI is smaller than the CQI threshold, the mobile station device sets an MM (measurement mode) for monitoring (measuring) the different frequency/base station device. When the measured instantaneous CQI is smaller than the average CQI in the measurement mode MM, the mobile station device suspends reception and/or transmission at the frequency utilized by the connected base station device, and generates a gap section.

Similar to the mobile station device, the base station device receives the report of the instantaneous CQI, and calculates an average CQI of the mobile station device. The calculated average CQI is compared with a CQI threshold of a system parameter. When the average CQI is greater than the CQI threshold, the base station device sets the normal mode NM. When the average CQI is smaller than the CQI threshold, the base station device sets the measurement mode MM for monitoring (measuring) the different frequency/base station. When the measured instantaneous CQI is smaller than the average CQI in the measurement mode MM, the base station device suspends the transmission of packet data addressed to the connected mobile station device, and generates a gap section. As shown in FIG. 19, the mobile station device terminates the gap section after finishing monitoring (measuring) the different frequency or the base station device, and resumes measuring an instantaneous CQI and reporting the measured instantaneous CQI. Then, the mobile station device continues similar processing.
Graphs G2 and G3 denote a partially enlarged view of the graph G1 shown in FIG. 19. The graph G2 denotes a state where no gap section is generated. The graph G3 denotes a sate where plural gap sections are generated continuously. As shown in the graph G1, the base station device and the mobile station device can switch between the normal mode NM and the measurement mode MM based on the instantaneous CQI, and autonomously control a start/end of a gap section.

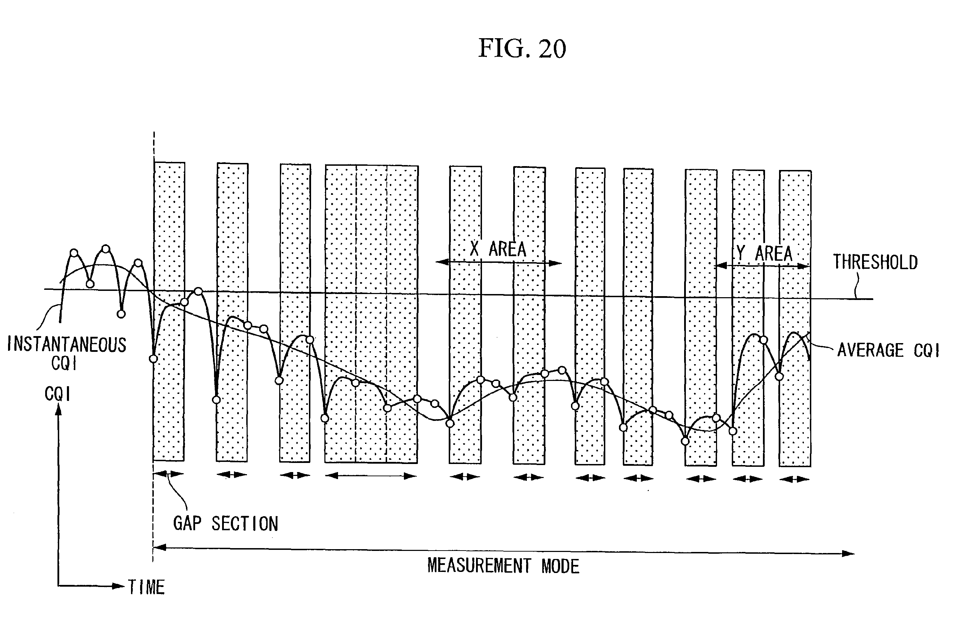

Non-patent document 5 discloses the autonomous gap generation method for monitoring (measuring) the base station device utilizing different frequencies upon Intra-RAT-HO (and Inter-Freq-HO) which is the handover between the same radio access technologies of EUTRA/EUTRAN and Inter-RAT-HO (and Inter-Freq-HO) which is the handover between different-radio access technologies.
In this method, the CQI threshold and the average CQI are compared, a determination of the measurement mode MM is executed with the determination condition of that the average CQI is smaller than the CQI threshold, and a gap section is generated when an instantaneous CQI becomes smaller than the average CQI in the measurement mode MM. In this method, even in a section of good CQI characteristics such as the gap sections in X and Y areas denoted in FIG 20 showing an example of CQI time-variation where an instantaneous CQI increases and exceeds the average CQI after the CQI measurement, a gap section is generated as long as the instantaneous CQI becomes below the average CQI upon the measurement at the start of the section.

In addition, throughputs for each user and for the entire system can be enhanced by combining AMCS and a scheduling that operates with a period of a few milliseconds according to radio conditions between the mobile station device and the base station device. As scheduling algorithms, the algorithms of Round Robin (hereinafter, RR), Maximum CIR (hereinafter, MaxCIR), and Proportional Fairness (hereinafter, PF) are known.

The RR scheduling is a scheduling method of sequentially executing downlink allocation to the mobile station device belonging to the base station device irrespective of the downlink communication quality. The RR scheduling is a scheduling method in which equity is highly prioritized, and characterized in that the throughput of the entire system is low.
The MaxCIR scheduling is a scheduling method of executing allocation to the mobile station device having the most preferable downlink communication quality among the mobile station devices belonging to the base station device. As a result, the throughput of the entire cell is high, but much allocation is executed for the mobile station device located close to the base station device and little allocation is executed for the mobile station device located far from the base station device, thereby being characterized in that unfairness among the mobile station devices is significant.

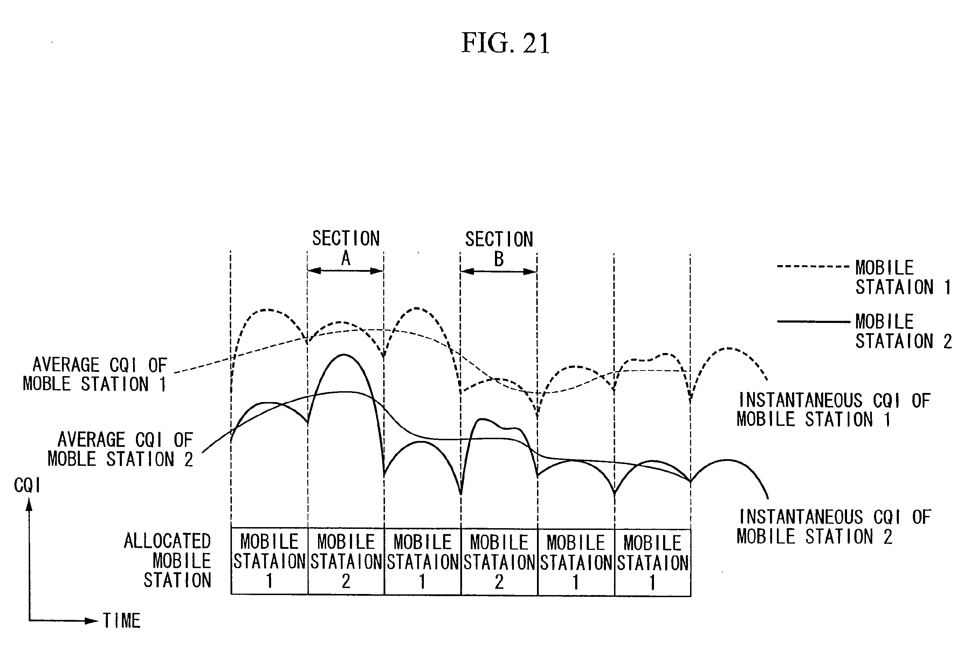

The PF scheduling is a scheduling method of executing the allocation to the mobile station device whose ratio of the downlink instantaneous communication quality and the averaged downlink communication quality is at a maximum. FIG 21 shows an example of allocation by the PF scheduling. In the sections A and B shown in FIG. 21, the instantaneous CQI and the average CQI for the mobile station device 1 are greater than those for the mobile station device 2. However, the ratio of the instantaneous CQI and the average CQI for the mobile station device 2 is greater than that for the mobile station device 1, therefore, the mobile station device 2 is allocated. The PF scheduling is characterized in that the throughput of the entire system is low compared with the MaxCIR scheduling, but temporal fairness with respect to each mobile station device is high similar to the RR scheduling.

In downlink EUTRA, a scheduling method is proposed in which the throughput of the entire system is enhanced by using the above scheduling method in consideration of fairness among the mobile station devices.
Non-Patent Document 1: "W-CDMA Mobile Communication System" by Keiji Tachikawa, ISBN 4-621-04894-5
Non-Patent Document 2: 3GPP TR (Technical Report) 25.858, and 3GPP HSDPA-specification-related document (http://www.3gpp.org/ftp/Specs/html-info/25-series.htm)
Non-Patent Document 3: 3GPP TR (Technical Report) 25.913, V2.1.0 (2005-05), Requirements for evolved Universal Terrestrial Radio Access (UTRA) and Universal Terrestrial Radio Access Network (UTRAN) (http://www.3gpp.org/fip/Specs/html-info/25913.htm)
Non-Patent Document 4: 3GPP TR (Technical Report) 25.814, V0.5.0 (2005-11), Physical Layer Aspects for Evolved UTRA (http://www.3gpp.org/ftp/Specs/html-info/25814.htm)
Non-Patent Document 5: NETT DoCoMo, Inc. "Measurement for LTE Intra-and Inter-RAT Mobility", 3GPP TSG RAN WG2 Meeting # 50, Sophia Antipolis, France, 9-13 January, 2006
Non-Patent Document 6: "Data Throughput of CDMA HDR a High Efficiency-High Data Rate Personal Communication Wireless System", IEEE VTC2000-Spring, pp. 1854-1858, Tokyo, May 2000

### DISCLOSURE OF THE INVENTION

### Problems to be Solved by the Invention

A gap section is set even in the case of the X and Y areas shown in FIG. 20 in which the CQI characteristics are improved in the gap setting method upon Intra-RAT-HO (Inter-Freq-HO) and Inter-RAT-HO (Inter-Freq-HO) in EUTRA/EUTEAN disclosed in non-patent document 5. Therefore, in some cases, even the area that might be allocated to the downlink of the mobile station device becomes a gap section, thereby increasing the period for which the downlink allocation is not executed. In this case, the throughput of the mobile station device greatly decreases, and QoS (Quality of Service) cannot be satisfied, thereby deteriorating the communication efficiency.

### Means for Solving the Problems

A mobile station device of an aspect of the present invention includes a mode determining unit that determines two modes that are a normal mode in which the mobile station device is in a normal state of communication with a base station device and a measurement mode in which the mobile station device communicates with the base station device or monitors a base station device to be a handover target. The mobile station device is characterized in that the mode determining unit determines whether to set the normal mode or the measurement mode based on a channel quality indication threshold and a channel quality indication characteristic at a frequency being used for the communication.

An aspect of the present invention is the mobile station device characterized in that the channel quality indication characteristic is an increasing and decreasing tendency of an average channel quality indication.

An aspect of the present invention is a base station device that communicates with the mobile station device according to claim 1, and characterized in that the base station device includes a mode determining unit that determines whether the mobile station device is in a normal mode or a measurement mode based on a channel quality indication threshold and a channel quality indication characteristic that is calculated from a channel quality indication obtained from the mobile station device during the communication.

An aspect of the present invention is the base station device characterized in that the channel quality indication characteristic is an increasing and decreasing tendency of an average channel quality indication.

An aspect of the present invention is a mobile station device that sets a gap section for monitoring a base station device to be a handover target, and characterized in that the mobile station device includes a gap determining unit that determines whether to set the gap section based on at least channel quality indication characteristics at a frequency being used for communication.

An aspect of the present invention is the mobile station device characterized in that the channel quality indication characteristics are a difference between an instantaneous channel quality indication and an average channel quality indication, and an increasing and decreasing tendency of the average channel quality indication.

An aspect of the present invention is the mobile station device characterized in that the channel quality indication characteristics are increasing and decreasing tendencies of an average channel quality indication and an instantaneous channel quality indication.

An aspect of the present invention is a base station device that includes a gap determining unit that determines whether to set a gap section in which transmission to a mobile station device is not executed based on at least channel quality indication characteristics calculated from a channel quality indication obtained from the mobile station device during communication.

An aspect of the present invention is the base station device characterized in that the channel quality indication characteristics are the difference between an instantaneous channel quality indication and an average channel quality indication, and an increasing and decreasing tendency of the average channel quality indication.

An aspect of the present invention is the base station device characterized in that the channel quality indication characteristics are increasing and decreasing tendencies of an average channel quality indication and an instantaneous channel quality.

### Effects of the Invention

Since the mobile station device and the base station device of the present invention determine to set either the normal mode or the measurement mode based on a threshold and characteristics of channel quality indication, the measurement mode is not likely to be set in the case where the channel quality indication characteristics are improved. Therefore, there is an advantage in that the period for which the downlink allocation to the mobile station device is not executed does not increase and efficient communication is enabled.
In addition, since the mobile station device and the base station device of the present invention determine whether to set a gap section based on the magnitude relationship between an instantaneous value and an average value of the channel quality indication, and the characteristics of the channel quality indication, a gap section is not likely to be set in the case where the characteristics of the channel quality indication are improved. Therefore, the period for which the downlink allocation to the mobile station device is not executed does not increase, and efficient communication is enabled.

### BRIEF DESCRIPTION OF THE DRAWINGS

FIG. 1 is a block diagram showing an outline configuration of a base station device according to a first embodiment of the present invention;
FIG. 2 is a block diagram showing an outline configuration of a mobile station device according to the first embodiment;
FIG. 3 is a graph showing an example of CQI time-change according to the first embodiment;
FIG. 4 is a flowchart showing a mode determination operation of the mobile station device according to the first embodiment;
FIG 5 is a flowchart showing a mode determination operation of the base station device according to the first embodiment;
FIG. 6 is a graph showing an example of CQI time-change according to a second embodiment of the present invention;
FIG. 7 is a block diagram showing an outline configuration of a base station device according to the second embodiment;
FIG. 8 is a block diagram showing an outline configuration of a mobile station device according to the second embodiment;
FIG 9 is a flowchart showing a gap determination operation of the mobile station device according to the second embodiment;
FIG. 10 is a flowchart showing a gap determination operation of the base station device according to the second embodiment;
FIG 11 is a graph showing an example of CQI time-change according to a third embodiment;
FIG. 12 is a block diagram showing an outline configuration of a base station device according to the third embodiment;
FIG. 13 is a block diagram showing an outline configuration of a mobile station device according to the third embodiment;
FIG. 14 is a flowchart showing a gap determination operation of the mobile station device according to the third embodiment;
FIG. 15 is a flowchart showing a gap determination operation of the base station device according to the third embodiment;
FIG 16 is a schematic plan view showing handover in a cellular mobile communication system;
FIG 17 is a time chart showing a compressed mode in a W-CDMA system;
FIG. 18 is a graph showing an example of a downlink radio frame configuration and radio channel mapping of EUTRA assumed based on the proposal of 3 GPP;
FIG 19 is a graph showing an autonomous gap control method;
FIG 20 is a graph showing an example of CQI time-change in a measurement mode;
FIG 21 is a graph showing an example with the use of Proportional Fairness scheduling; and
FIG. 22 shows an allocation example of mobile station devices belonging to the base station device.

### Descriptions of Numerals

- 10: radio unit
- 11: uplink demodulating unit
- 12, 112, and 212: CQI storing unit
- 13: CQI measuring unit
- 14, 114, and 214: TTM/MM determining unit
- 15, 115, and 215: GAP determining unit
- 16: control-data extracting unit
- 17: scheduling unit
- 18: data control unit
- 19: OFDM modulating unit
- 20: uplink scheduling unit
- 21: downlink scheduling unit
- 30: radio unit
- 31: radio control unit
- 32: switching unit
- 33: OFDM demodulating unit
- 34, 134, and 234: CQI measuring-and-storing unit
- 35: Other-RAT demodulating unit
- 36: CQI measuring unit
- 37, 137, and 237: NM/MM determining unit
- 38, 138, and 238: GAP determining unit
- 39: control-data extracting unit
- 40: control-data generating unit
- 41: data control unit
- 42: uplink modulating unit

### BEST MODE FOR CARRYING OUT THE INVENTION

With reference to the accompanying drawings, exemplary embodiments of the present invention are explained.

### [First Embodiment]

A downlink radio frame configuration and radio channel mapping in the present embodiment are almost the same as those proposed in EUTRA/EUTRAN explained also in the background art as shown in FIG. 18.
The downlink radio frame is a bundle of subcarriers, and includes two-dimensional radio resource blocks (hereinafter, "RB") defined by a frequency bandwidth Bch and a Transmission Timing Interval (hereinafter, "TTI").

Common Pilot Channel (hereinafter, "CPICH") is mapped to the head of each sub-frame interval TTI, and Broadcast Channel (hereinafter, "BCH") and Synchronization Channel (hereinafter, "SCH") are mapped to the head of the sub-frame interval TTI of each radio frame. A rest part of each radio resource block RB is used as a traffic channel TCH, and mapped to each mobile station device using AMCS.
Upon the power being turned on, the mobile station device receives the synchronization channel SCH, and identifies a carrier offset, an OFDM symbol timing, a radio frame timing, a sub-frame interval TTI timing, a cell group index/cell index (e.g., scramble-code group index/scramble code index), etc. Then, the mobile station device receives system broadcast information such as unique information concerning the base station device over the broadcast channel BCH, enters an idle mode after position registration, and then monitors downlink Paging Indicator Channel (hereinafter, "PICH") and a peripheral base station. Upon a call from the base station device, the mobile station device is wirelessly connected to the base station device through PICH and the paging channel PCH after the wireless connection procedure, enters an active mode, measures an instantaneous CQI that is a downlink channel quality indication, and feeds the measured instantaneous CQI back to the base station device. The base station device receives the instantaneous CQI of each mobile station device, and executes packet data allocation to each radio resource block RB of the downlink traffic channel TCH (packet data scheduling).

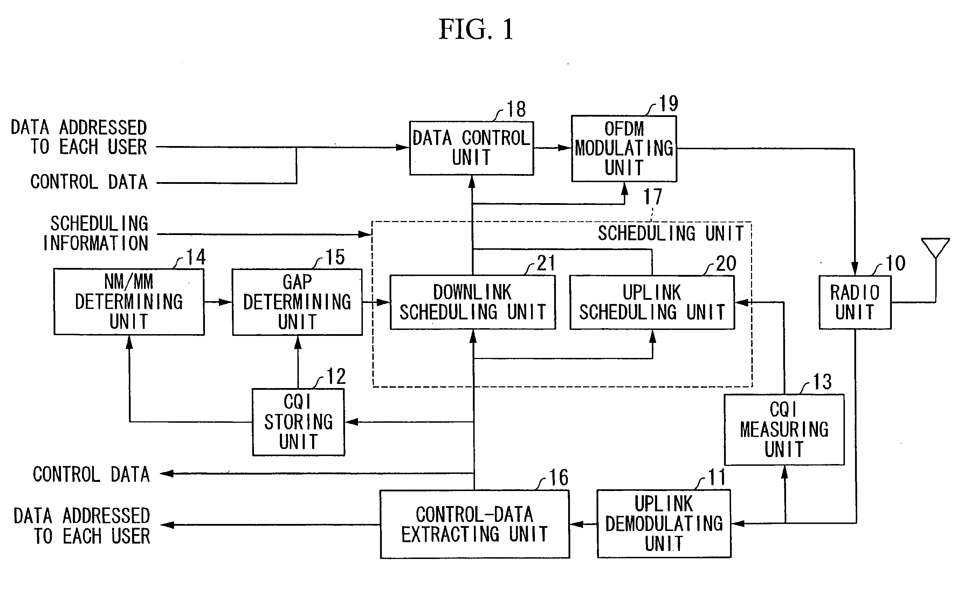

FIG 1 is a block diagram showing an outline configuration of a base station device according to the embodiment of the present invention. The base station device includes a radio unit 10, an uplink demodulating unit 11, a CQI storing unit 12 that stores a CQI that is a downlink channel quality indication, a CQI measuring unit 13, an NM/MM determining unit (mode determining unit) 14 concerning the normal mode NM and the measurement mode MM, a GAP determining unit 15, a control-data extracting unit 16, a scheduling unit 17, a data-control unit 18, and an OFDM demodulating unit 19.

Transmission data (data addressed to each user) and control data are input to the data control unit 18.
The data control unit 18 maps the control data to the broadcast channel BCH, the synchronization channel SCH, and the pilot channel CPICH according to an instruction from the scheduling unit 17, and the transmission data addressed to each mobile station device to the traffic channel TCH. The OFDM modulating unit 19 executes OFDM signal processing such as data modulation, input-signal serial-parallel conversion, multiplication of a spreading factor and a scrambling code, IFFT (Inverse Discrete Fast Fourier Transform), CP (Cyclic Prefix) insertion, filtering, and generates an OFDM signal. In addition, the OFDM modulating unit 19 executes data modulation of each subcarrier with a modulation method specified by AMC (Adaptive Modulation and Coding) information output from the scheduling unit 17. The radio unit 10 upconverts the OFDM-modulated data into a transmission radio frequency to be transmitted to the mobile station device.

The radio unit 10 receives uplink data from the mobile station device, downconverts the received data into a baseband signal, outputs the received data to the uplink demodulating unit 11 and the CQI measuring unit 13 which is a downlink channel quality indication. The CQI measuring unit 13 estimates radio-propagation-path characteristics from the uplink pilot channel, and outputs the estimation result to the scheduling unit 17 (uplink scheduling unit 20) for uplink scheduling. The uplink demodulating unit 11 demodulates the data modulated by the mobile station device. Although a single-carrier method such as DET-spread OFDM and VSCRF-CDMA is assumed as the uplink communication method, a multi-carrier method such as the OFDM method may be used.

The control-data extracting unit 16 divides the demodulated received data into user data (each user data) and control data. CQI information in the control data is output to the CQI storing unit 12. The control data concerning uplink and downlink scheduling are output to the scheduling unit 17. Other control data are output to an upper layer. The CQI storing unit 12 stores an instantaneous CQI transmitted from the mobile station device, and calculates an average CQI and an average CQI curve. The calculation result and the instantaneous CQI are output to the NM/MM determining unit 14 that executes determination of the normal NM mode and the measurement mode MM. The NM/MM determining unit 14 executes the determination of the measurement mode MM, and outputs the determination result and the instantaneous CQI to the GAP determining unit 15. The GAP determining unit 15 executes a gap determination, and outputs the determination result and the instantaneous CQI to the scheduling unit 17.

The scheduling unit 17 includes a downlink scheduling unit 21 that executes downlink scheduling and an uplink scheduling unit 20 that executes uplink scheduling. The downlink scheduling unit 21 calculates scheduling for mapping user data to each downlink channel and AMC for modulating each data based on the instantaneous CQI which is the downlink channel quality indication and notified by the mobile station device, the average CQI output from the GAP determining unit 15, the MM determination result, the GAP determination result, and each user information notified from the upper layer. The uplink scheduling unit 20 calculates scheduling for mapping user data to each uplink channel and AMC for modulating each data based on uplink radio-propagation-path estimation result output from the CQI measuring unit 13 and a resource allocation request from the mobile station device.

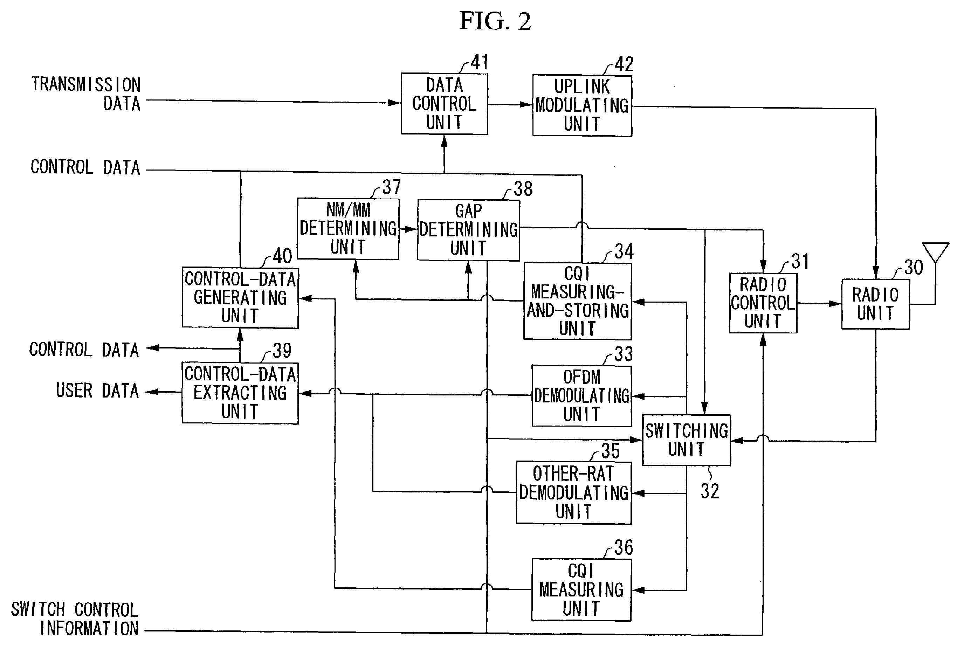

FIG 2 is a block diagram showing an outline configuration of the mobile station device of the present embodiment.
The mobile station device includes a radio unit 30, a radio control unit 31, a switching unit 32, an OFDM demodulating unit 33, a CQI measuring-and-storing unit 34, an Other-RAT demodulating unit 35, a CQI measuring unit 36, an NM/MM determining unit (mode determining unit) 37, a GAP determining unit 38, a control-data extracting unit 39, a control-data generating unit 40, a data control unit 41, and an uplink modulating unit 42.

Transmission data, control data, and a downlink instantaneous CQI are input to the data control unit 41. The data control unit 41 multiplexes the transmission data, the control data, and the downlink instantaneous CQI so as to be in an uplink frame format, and outputs the multiplexed data to the uplink modulating unit 42. The uplink modulating unit 42 executes processing such as data modulation in the uplink modulation method, and outputs the modulated data to the radio unit 30. Although a single-carrier method such as DFT-spread OFDM or VSCRF-CDMA is assumed as the uplink communication method, a multi-carrier method such as the OFDM method may be used. The radio unit 30 upconverts the uplink modulated data into a transmission radio frequency to be transmitted to the base station device. In addition, the radio unit 30 receives downlink data from the base station device and another RAT, downconverts the received data into a baseband signal, and transmits the received data to the switching unit 32. The switching unit 32 switches reception paths for outputting the received data to the OFDM demodulating unit 33 and the CQI measuring-and-storing unit 34, or the Other-RAT demodulating unit 35 and the CQI measuring unit 36 by the GAP determining unit 38 and the switch control information from the upper layer.

The radio control unit 31 switches radio frequencies by the GAP determining unit 38 and the switch control information from the upper layer. The OFDM demodulating unit 33 demodulates an OFDM signal, and outputs the demodulated data to the control-data extracting unit 39. The CQI measuring-and-storing unit 34 estimates radio-propagation-path characteristics from the downlink pilot channel, and measures and stores an instantaneous CQI. The CQI measuring-and-storing unit 34 calculates an average CQI and an average CQI curve from the measured instantaneous CQI, and outputs the calculation result and the instantaneous CQI to the NM/MM determining unit 37. In addition, the CQI measuring-and-storing unit 34 outputs the instantaneous CQI to the data control unit 41 to transmit the instantaneous CQI to the base station device. The NN/MM determining unit 37 executes determination of the measurement mode MM based on the calculation result and the instantaneous CQI, and outputs the determination result and the instantaneous CQI to the GAP determining unit 38. The GAP determining unit 38 executes a gap determination, and based on the determination result, instructs the radio control unit 31 to switch the radio frequency and the switching unit 32 to switch the reception path. The Other-RAT demodulating unit 35 demodulates data received from another RAT, and outputs the demodulated data to the control-data extracting unit 39. The CQI measuring unit 36 estimates radio-propagation-path characteristics from the downlink pilot channel of the other RAT, and measures an instantaneous CQI, and outputs the measurement result to the control-data generating unit 40. The control-data extracting unit 39 divides the demodulated received data into user data and control data. The control-data extracting unit 39 outputs the control data concerning the other RAT to the control-data generating unit 40, and other data to the upper layer.
The control-data generating unit 40 changes the monitoring (measuring) result during the gap section into control data, and outputs the control data to the data control unit 41 for transmission to the base station device.

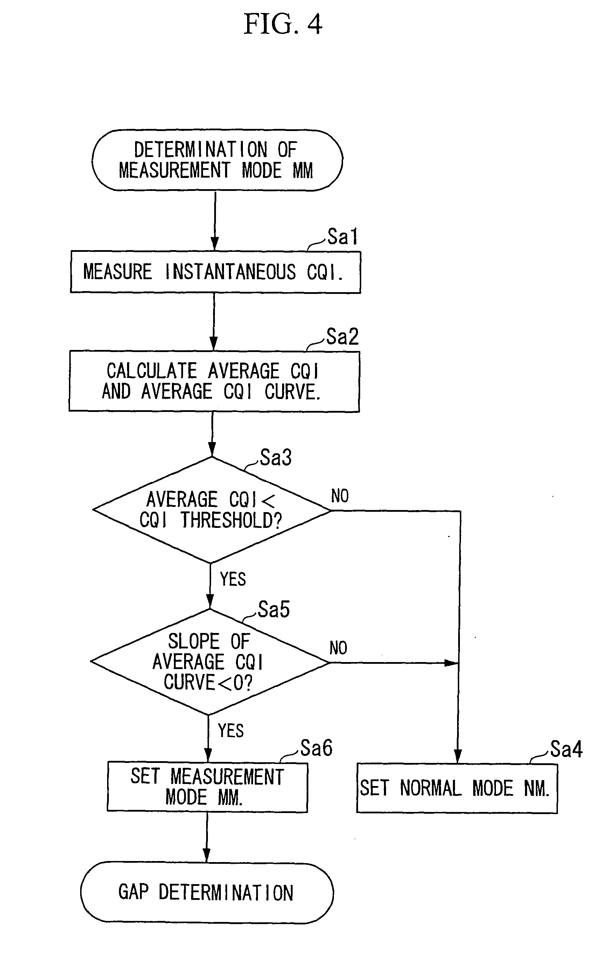

With reference to FIG. 4, an operation of determining the normal mode NM and the measurement mode MM executed by the mobile station device according to the present embodiment is explained.
The CQI measuring-and-storing unit 34 related to the downlink channel quality indication measures an instantaneous CQI (Sa 1), calculates an average CQI and an average CQI curve consisting of the average CQIs (average curve of the channel quality indication) from the current instantaneous CQI and the past instantaneous CQIs, and a slope K between the previous average CQI and the current average CQI of the average CQI curve (Sa2). The NM/MM determining unit 37 compares the CQI threshold and the average CQI (Sa 3), proceeds to the normal mode NM if the average CQI is greater than the CQI threshold (Sa 4). If the average CQI is smaller than the CQI threshold, the NM/MM determining unit 37 refers to the slope K (Sa 5) and proceeds to the normal mode NM if the slope K is positive (the slope is zero or upward) (Sa 4), or to the measurement mode MM if the slope K is negative (the slope is downward) (Sa 6). If proceeding to the measurement mode MM, gap determination processing is executed.

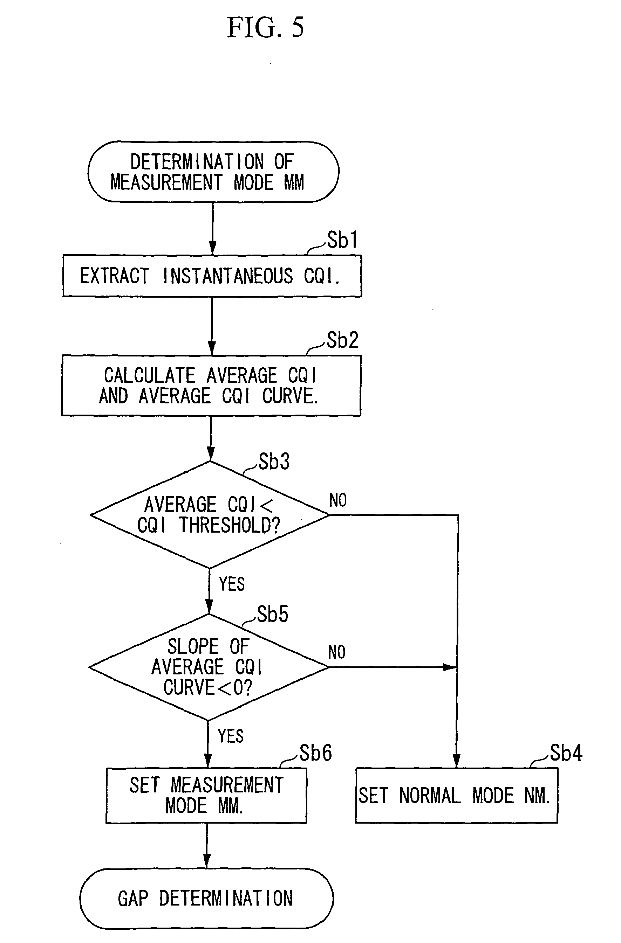

With reference to FIG. 5, an operation of determining the normal mode NM and the measurement mode MM executed by the base station device according to the present embodiment is explained.
The control-data extracting unit 16 extracts the instantaneous CQI uplinked from the mobile station device, and outputs the extracted instantaneous CQI to the CQI storing unit 12 (Sb 1). Upon receiving the instantaneous CQI, the CQI storing unit 12 calculates an average CQI and an average CQI curve consisting of the average CQIs (average curve of the channel quality indication) from the current instantaneous CQI and the past instantaneous CQIs, and a slope K between the previous average CQI and the current average CQI of the average CQI curve (Sb 2). The CQI storing unit 12 outputs the calculated average CQI and the slope K to the NM/MM determining unit 14. The NM/MM determining unit 14 compares the CQI threshold and the average CQI (Sb 3), proceeds to the normal mode NM if the average CQI is greater than the CQI threshold (Sb 4). If the average CQI is smaller than the CQI threshold, the NM/MM determining unit 14 refers to the slope K (Sb 5) and proceeds to the normal mode NM if the slope K is positive (the slope is zero or upward) (Sb 4), or to the measurement mode MM if the slope K is negative (the slope is downward) (Sb 6). If proceeding to the measurement mode MM, gap determination processing is executed.

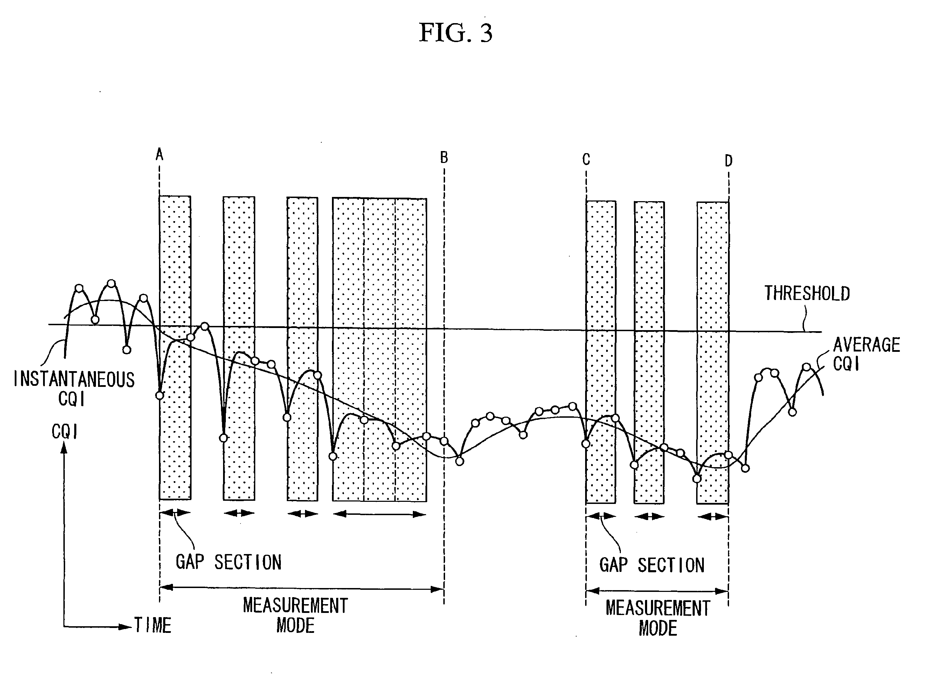

With reference to FIG. 3, the determination of the normal mode NM and the measurement mode MM executed by the mobile station device and the base station device is explained in detail.
At the time A, the instantaneous CQI is below the CQI threshold (Sa 3 and Sb 3), and the slope of the average CQI curve is smaller than zero (Sa 5 and Sb 5), thereby proceeding to the measurement mode MM. The measurement mode MM continues until the time B, a gap determination is executed in the measurement mode MM section. It is defined here that a gap section is generated when the instantaneous CQI becomes below the average CQI. At the time B, the instantaneous CQI is below the CQI threshold (Sa 3 and Sb 3), but the slope of the average CQI curve becomes positive (Sa 5 and Sb 5), thereby proceeding to the normal mode NM (Sa 4 and Sb 4). The normal mode NM continues to the time C, a gap section is not set even when the instantaneous CQI becomes below the average CQI, and downlink allocation available state continues. At the time C, the instantaneous CQI is below the CQI threshold again (Sa 3 and Sb 3), and the slope of the average CQI curve is smaller than zero (Sa 5 and Sb 5), thereby proceeding to the measurement mode MM and staying in the measurement mode MM until the time D (Sa 6 and Sb 6). After the time D, the average CQI is below the CQI threshold (Sa 3 and Sb 3), but the slope of the average CQI curve becomes positive (Sa 5 and Sb 5), thereby proceeding to the normal mode NM (Sa 4 and Sb 4). A gap section is not set even when the instantaneous CQI becomes below the average CQI after the time D, and downlink allocation available state continues.

Thus, the determination of the normal mode NM/measurement mode MM is executed in consideration of the slope of the average CQI curve that is a characteristic of the channel quality indication CQI in addition to the determination based on the comparison of the CQI threshold and the average CQI. As a result, the downlink scheduling is executed with the measurement mode MM not being set in the area where the CQI characteristic is improved. Therefore, deterioration of the throughput with respect to the mobile station device that monitors (measures) a base station device of a different frequency/different radio access technology can be prevented.
Although the slope of the average CQI curve is the slope between the previous average CQI and the current average CQI in the present embodiment, the last but one and the last but two average CQIs may be used to execute higher dimensional interpolation and to calculate the slope.

### [Second Embodiment]

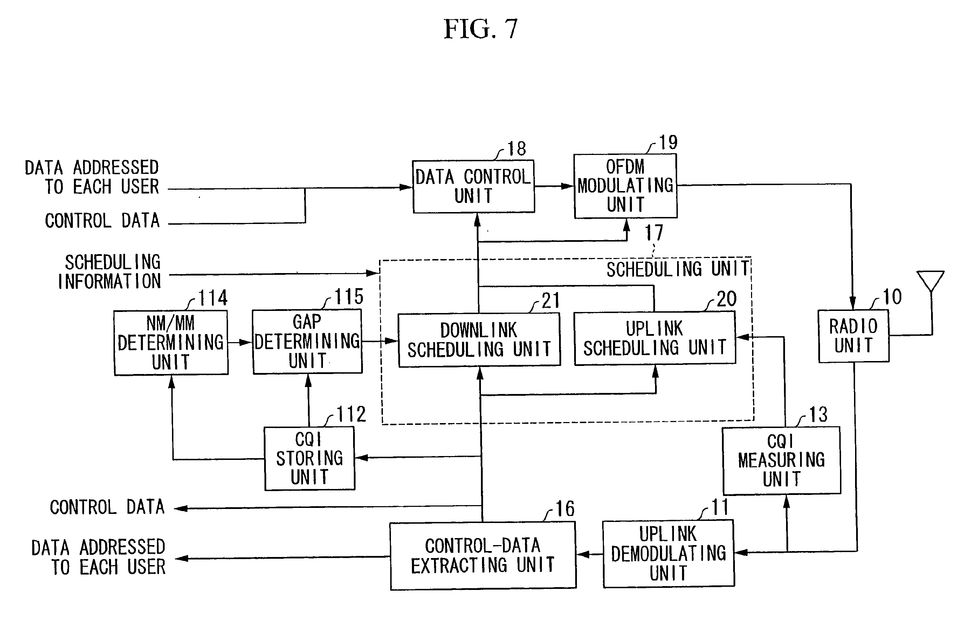

FIG. 7 shows an outline configuration of a base station device according to the present embodiment. Similar to the first embodiment, this base station device includes the radio unit 10, the uplink demodulating unit 11, a CQI storing unit 112, the CQI measuring unit 13, an NM/MM determining unit (mode determining unit) 114, a GAP determining unit 115, the control-data extracting unit 16, the scheduling unit 17, the data-control unit 18, and the OFDM demodulating unit 19. Since each unit other than the CQI storing unit 112, the NM/MM determining unit 114, and the GAP determining unit 115 of the base station device in the present embodiment is similar to that in the first embodiment, the difference thereof is focused on and explained below.

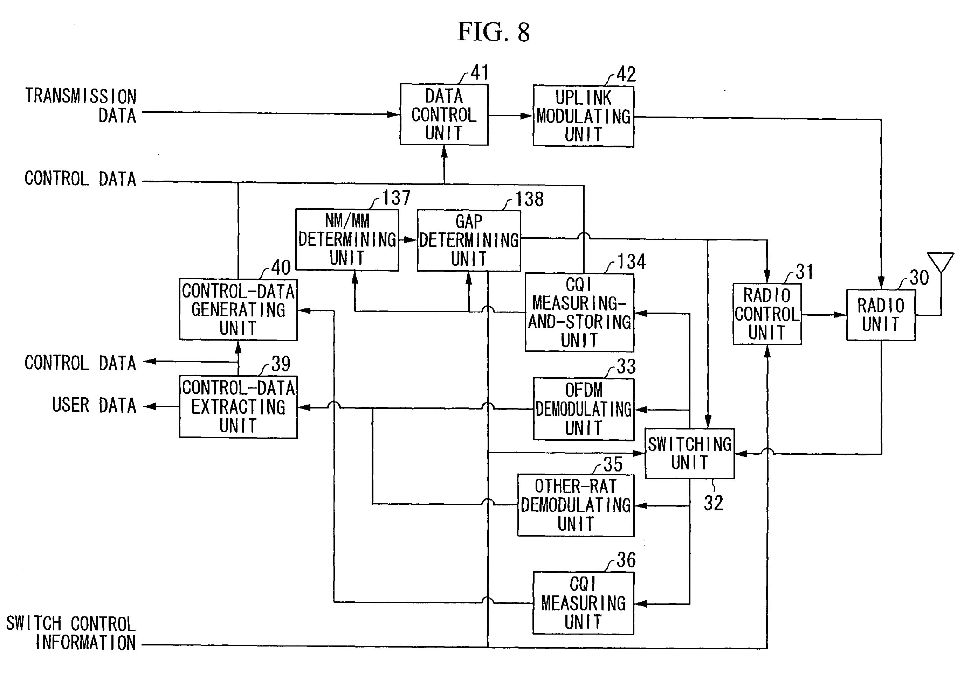

FIG. 8 shows an outline configuration of a mobile station device according to the present embodiment. Similar to the first embodiment, this mobile station device includes the radio unit 30, the radio control unit 31, the switching unit 32, the OFDM demodulating unit 33, a CQI measuring-and-storing unit 134, the Other-RAT demodulating unit 35, the CQI measuring unit 36, an NM/MM determining unit 137 (mode determining unit), a GAP determining unit 138, the control-data extracting unit 39, the control-data generating unit 40, the data control unit 41, and the uplink modulating unit 42. Since each unit other than the CQI storing unit 134, the NM/MM determining unit 137, and the GAP determining unit 138 of the mobile station device in the present embodiment is similar to that in the first embodiment, the difference thereof is focused on and explained below.
It is noted that a determination condition of the measurement-mode-MM used by the NM/MM determining unit 114 of the base station device and the NM/MM determining unit 137 of the mobile station device of the present invention is that the average CQI is below the CQI threshold.

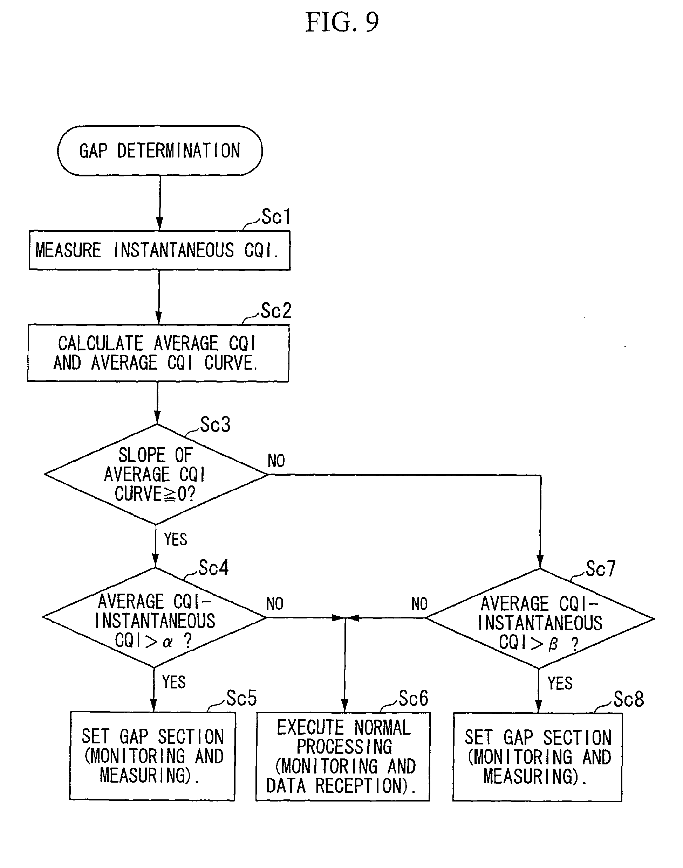

With reference to FIG. 9, a gap determination operation in the measurement mode MM executed by the mobile station device of the present embodiment is explained.
The CQI measuring-and-storing unit 134 measures an instantaneous CQI (Sc 1), calculates an average CQI and an average CQI curve consisting of the average CQIs from the current instantaneous CQI and the past instantaneous CQIs, calculates the slope K between the previous average CQI and the current average CQI (Sc 2), and outputs the current instantaneous CQI, the calculated average CQI, and the calculated slope K to the GAP determining unit 138. If the slope K is positive (Sc 3), the GAP determining unit 138 determines whether or not a difference between the average CQI and the instantaneous CQI is greater than a predetermined threshold α (Sc 4). If the difference is greater than the threshold α, the GAP determining unit 138 determines that it is a gap section (Sc 5), and in the gap section, instructs the radio control unit 31 to receive a signal from a base station device of a different frequency and the switching unit 32 to transmit the received signal to the CQI measuring unit 36. The CQI measuring unit 36 measures (moniors) a CQI of the signal received from the switching unit 32. If the difference is smaller than the threshold α (Sc 4), the GAP determining unit 138 determines that it is a normal state (Sc 6), and instructs the radio control unit 31 and the switching unit 32 to continue the downlink monitoring by the CQI measuring-and-storing unit 134 or the data reception by the OFDM demodulating unit 33. If the slope K is smaller than zero (Sc 3), the GAP determining unit 138 determines whether or not the difference between the average CQI and the instantaneous CQI is greater than a threshold P (where β<α) (Sc 7). If the difference is greater than the threshold β, the GAP determining unit 38 determines that it is a gap section (Sc 8), and similar to step Sc 5, the mobile station device measures (monitors) the base station device of the different frequency in the gap section. If the difference is smaller than the threshold β (Sc 7), the GAP determining unit 138 determines that it is the normal state (Sc 6), and continues the downlink monitoring or the data reception as explained above.

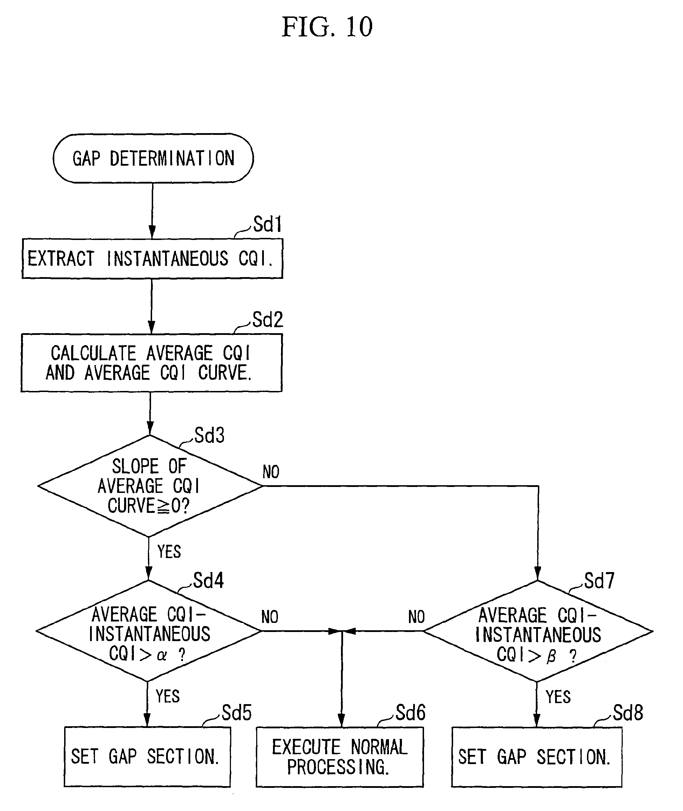

With reference to FIG 10, a gap determination operation in the measurement mode MM executed by the base station device of the present embodiment is explained.
The control-data extracting unit 16 extracts an instantaneous CQI, and outputs the extracted instantaneous CQI to the CQI storing unit 112 (Sd 1). The CQI storing unit 112 calculates an average CQI and an average CQI curve consisting of the average CQIs from the current instantaneous CQI and the past instantaneous CQIs, calculates the slope K between the previous average CQI and the current average CQI, and outputs the current instantaneous CQI, the calculated average CQI, and the calculated slope K to the GAP determining unit 115 (Sd 2). If the slope K is positive (Sd 3), the GAP determining unit 115 determines whether or not a difference between the average CQI and the instantaneous CQI is greater than a predetermined threshold α (Sd 4). If the difference is greater than the threshold α, the GAP determining unit 115 determines that it is a gap section, and notifies the downlink scheduling unit 21 that it is the gap section. When receiving the notice, the downlink scheduling unit 21 recognizes that it is the gap section, and does not execute downlink allocation to the target mobile station device (Sd 5). If the difference is smaller than the threshold α (Sd 3), the GAP determining unit 115 determines that it is a normal state (Sd 6). If the slope K is smaller than zero (Sd 3), the GAP determining unit 115 determines whether or not the difference between the average CQI and the instantaneous CQI is greater than a threshold β (where β<α) (Sd 7). If the difference is greater than the threshold β, the GAP determining unit 115 determines that it is a gap section, and similar to step Sd 5, the base station device does not execute the downlink allocation to the target mobile station device in the gap section (Sd 8). If the difference is smaller than the threshold β, the GAP determining unit 115 determines that it is a normal state, and the base station device regards the target mobile station device as the downlink allocation target and executes the entire scheduling (Sd 6).

The thresholds α and β may be output from the base station device to the mobile station device as the system parameters through the broadcast channel BCH, or to the base station device as the parameter of the mobile station device by the mobile station device through the uplink signaling channel. In addition, the thresholds α and β may be appropriately changed according to the circumstances and conditions of the base station device and the mobile station device.

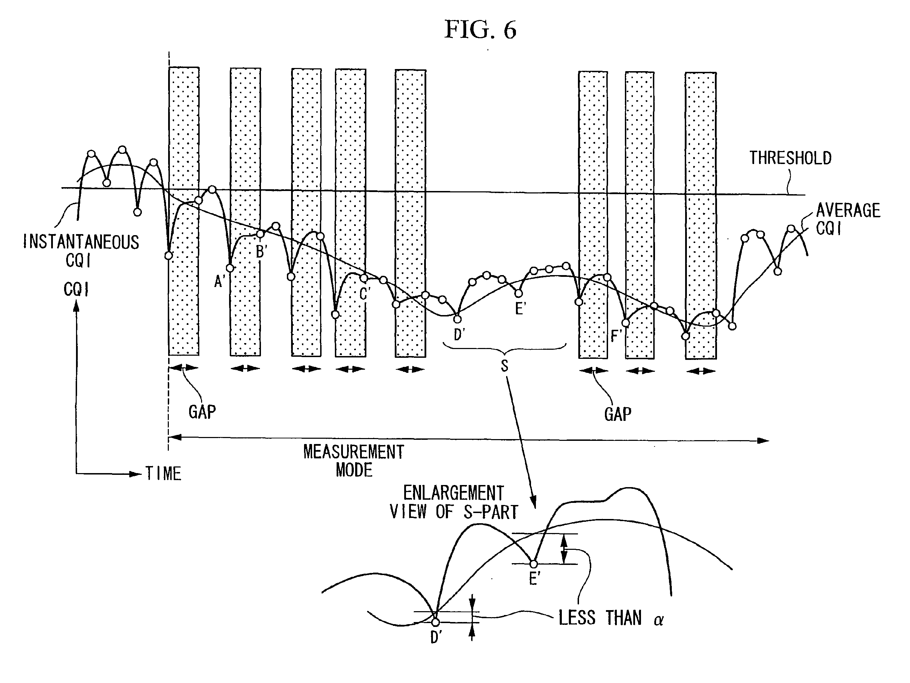

With reference to FIG. 6, the operations of the mobile station device and the base station device according to the present embodiment are explained in detail.
At the time A' and F', the slope of the average CQI curve is smaller than zero (Sc 3 and Sd 3), and the difference between the average CQI and the instantaneous CQI is greater than the threshold β (Sc 7 and Sd 7). As a result, it is determined to be a gap section, and the mobile station device monitors (measures) a base station device of a different frequency in the gap section (Sc 8). The base station device excludes the mobile station device from the scheduling target in the gap section (Sd 8). At the time B' and C', the slope of the average CQI curve is smaller than zero (Sc 3 and Sd 3), but the difference between the average CQI and the instantaneous CQI is less than the threshold β (Sc 7 and Sd 7). As a result, it is not determined to be a gap section, and the mobile station device executes downlink monitoring or data reception (Sc 6). The base station device executes scheduling including the target mobile station device (Sd 6). At the time D' and E', the slope of the average CQI curve is positive (Sc 3 and Sd 3), and the difference between the average CQI and the instantaneous CQI is smaller than the threshold α (Sc 4 and Sd 4). As a result, it is not determined to be a gap section, the mobile station device executes downlink monitoring or data reception (Sc 6). The base station device executes scheduling including the target mobile station device (Sd 6).

Thus, the gap determination is executed in consideration of the slope of the average CQI curve and the difference between the instantaneous CQI and the average CQI that are the CQI characteristics in addition to the determination based on the comparison of the instantaneous CQI and the average CQI. As a result, the downlink scheduling is executed in the area where the CQI characteristics are improved. Therefore, deterioration of the throughput with respect to the mobile station device that monitors (measures) a base station device can be prevented.
Although the slope of the average CQI curve and the difference between the instantaneous CQI and the average CQI are used as the CQI characteristics in the present embodiment, the ratio of the instantaneous CQI and the average CQI may be used.
Although the slope of the average CQI curve is the slope between the previous average CQI and the current average CQI in the present embodiment, in addition to the previous and the current average CQI, the last but one and the last but two average CQIs may be used to execute dimensional interpolation and to calculate the slope.

### [Third Embodiment]

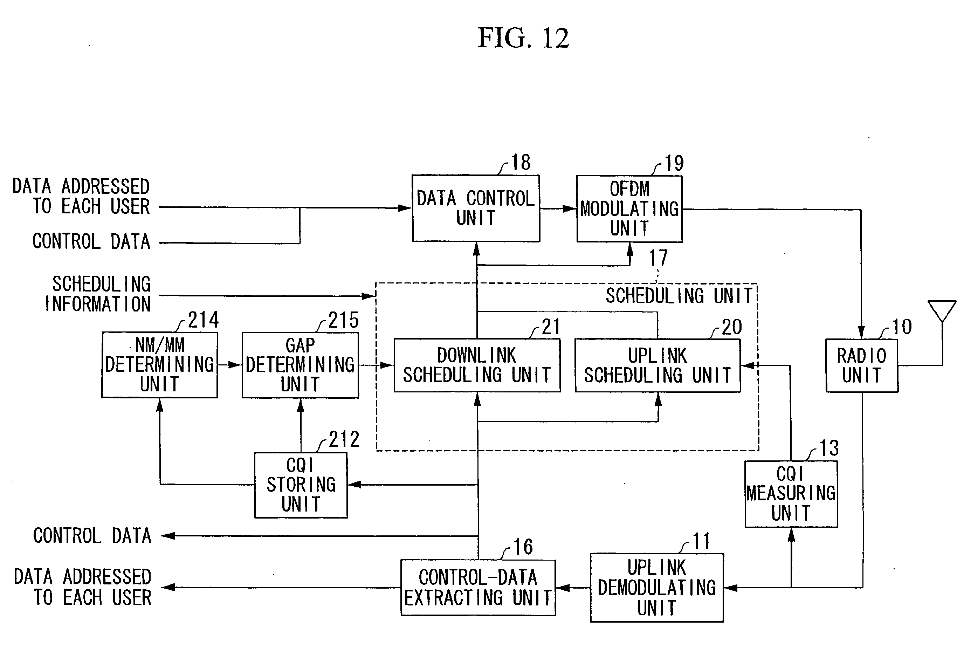

FIG. 12 shows an outline configuration of a base station device according to the present embodiment. Similar to the first embodiment, this base station device includes the radio unit 10, the uplink demodulating unit 11, a CQI storing unit 212, the CQI measuring unit 13, an NM/MM determining unit (mode determining unit) 214, a GAP determining unit 215, the control-data extracting unit 16, the scheduling unit 17, the data-control unit 18, and the OFDM demodulating unit 19. Since each unit other than the CQI storing unit 212, the NM/MM determining unit 214, and the GAP determining unit 215 of the base station device in the present embodiment is similar to that in the first embodiment, the difference thereof is focused on and explained below.

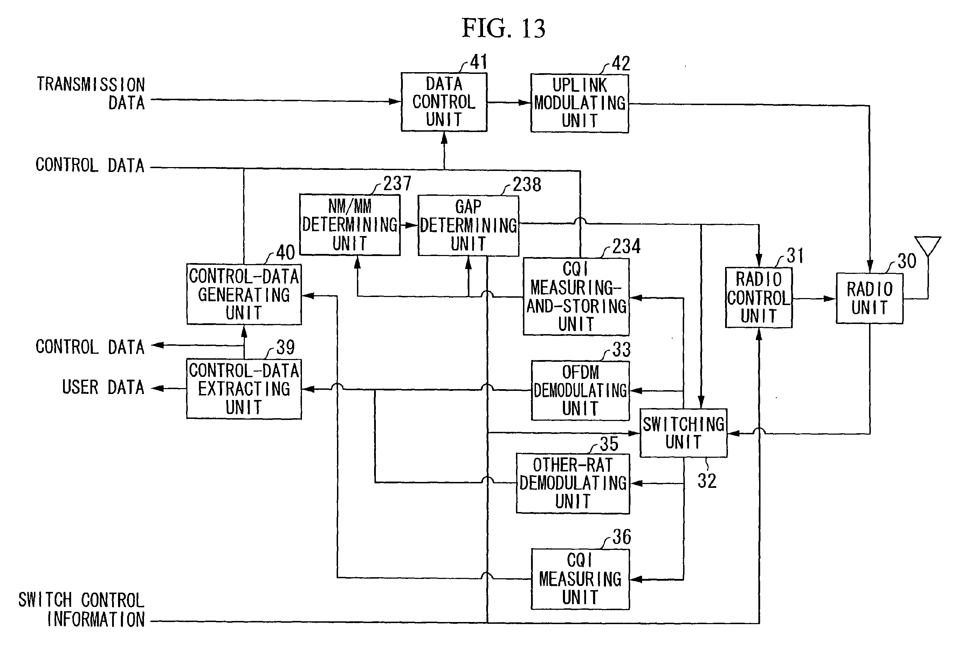

FIG. 13 shows an outline configuration of a mobile station device according to the present embodiment. Similar to the first embodiment, this mobile station device includes the radio unit 30, the radio control unit 31, the switching unit 32, the OFDM demodulating unit 33, a CQI measuring-and-storing unit 234, the Other-RAT demodulating unit 35, the CQI measuring unit 36, an NM/MM determining unit (mode determining unit) 237, a GAP determining unit 238, the control-data extracting unit 39, the control-data generating unit 40, the data control unit 41, and the uplink modulating unit 42. Since each unit other than the CQI storing unit 234, the NM/MM determining unit 237, and the GAP determining unit 238 of the mobile station device in the present embodiment is similar to that in the first embodiment, the difference thereof is focused on and explained below.
It is noted that a determination condition of the measurement mode MM used by the NM/MM determining unit 214 of the base station device and the NM/MM determining unit 237 of the mobile station device of the present embodiment is that the average CQI is below the CQI threshold.

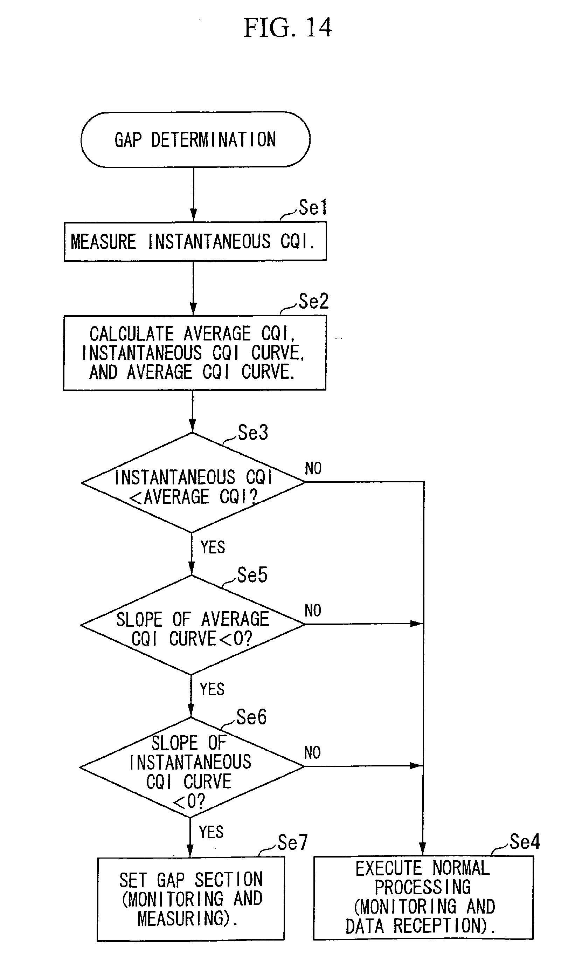

With reference to FIG 14, a gap determination operation in the measurement mode MM executed by the mobile station device of the present embodiment is explained.
The CQI measuring-and-storing unit 234 measures an instantaneous CQI (Se 1), calculates an average CQI, an average CQI curve consisting of the average CQIs, and an instantaneous CQI curve consisting of the instantaneous CQIs from the current instantaneous CQI and the past instantaneous CQIs, calculates a slope K between the previous average CQI and the current average CQI of the average CQI curve and a slope L between the previous instantaneous CQI and the current instantaneous CQI of the instantaneous CQI curve (Se 2). If the instantaneous CQI and the average CQI are compared (Se 3), and the instantaneous CQI is equal to or exceeds the average CQI, the GAP determining unit 238 determines that it is the normal state (Se 4), and instructs the radio control unit 31 and the switching unit 32 to continue the downlink monitoring by the CQI measuring-and-storing unit 234 or the data reception by the OFDM demodulating unit 33.
If the instantaneous CQI is smaller than the average CQI, and the slope K of the average CQI curve is smaller than zero (Se 5) and the slope L of the instantaneous CQI curve is smaller than zero (Se 6), the GAP determining unit 238 determines that it is a gap section (Se 7) and instructs the radio control unit 31 to receive a signal from a base station device of a different frequency and the switching unit 32 to transmit the received signal to the CQI measuring unit 36 in the gap section. The CQI measuring unit 36 measures (moniors) a CQI of the signal received from the switching unit 32.

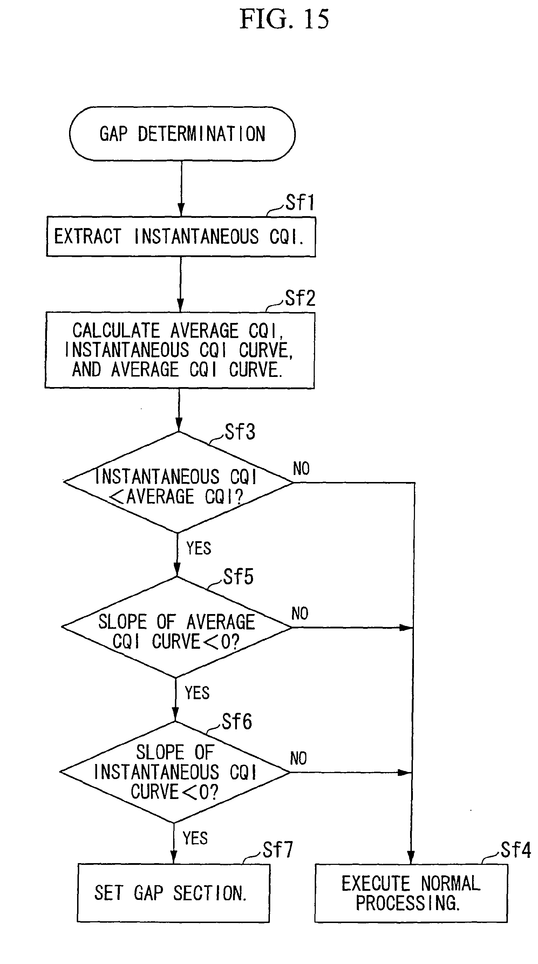

With reference to FIG. 15, a gap determination operation in the measurement mode MM executed by the base station device of the present embodiment is explained.
The control-data extracting unit 16 extracts an instantaneous CQI, and outputs the extracted instantaneous CQI to the CQI storing unit 212 (Sf 1). The CQI storing unit 212 calculates an average CQI, an average CQI curve consisting of the average CQIs, and an instantaneous CQI curve consisting of the instantaneous CQIs (channel quality indication curves) from the current instantaneous CQI and the past instantaneous CQIs, calculates a slope K between the previous average CQI and the current average CQI of the average CQI curve, and the slope L between the previous instantaneous CQI and the current instantaneous CQI of the instantaneous CQI curve (Sf 2). If the instantaneous CQI and the average CQI are compared (Sf 3), and the instantaneous CQI is equal to or exceeds the average CQI, the GAP determining unit 215 determines that it is a normal state (Sf 4), and notifies the downlink scheduling unit 21 that it is not the gap section. When receiving the notice, the downlink scheduling unit 21 regards the target mobile station device as the downlink allocation target and executes the entire scheduling (Sf 5). If the instantaneous CQI is smaller than the average CQI, the slope K of the average CQI curve is smaller than zero (Sf 5) and the slope L of the instantaneous CQI curve is smaller than zero (Sf 6), the GAP determining unit 215 determines that it is a gap section (Sf 7), and notifies the downlink scheduling unit 21 that it is the gap section. When receiving the notice, the downlink scheduling unit 21 recognizes that it is the gap section, and does not execute downlink allocation to the target mobile station device. Otherwise, the GAP determining unit 215 determines that it is a normal state (Sf 4), and notifies the downlink scheduling unit 21 that it is not the gap section. When receiving the notice, the downlink scheduling unit 21 regards the target mobile station device as the downlink allocation target and executes the entire scheduling.

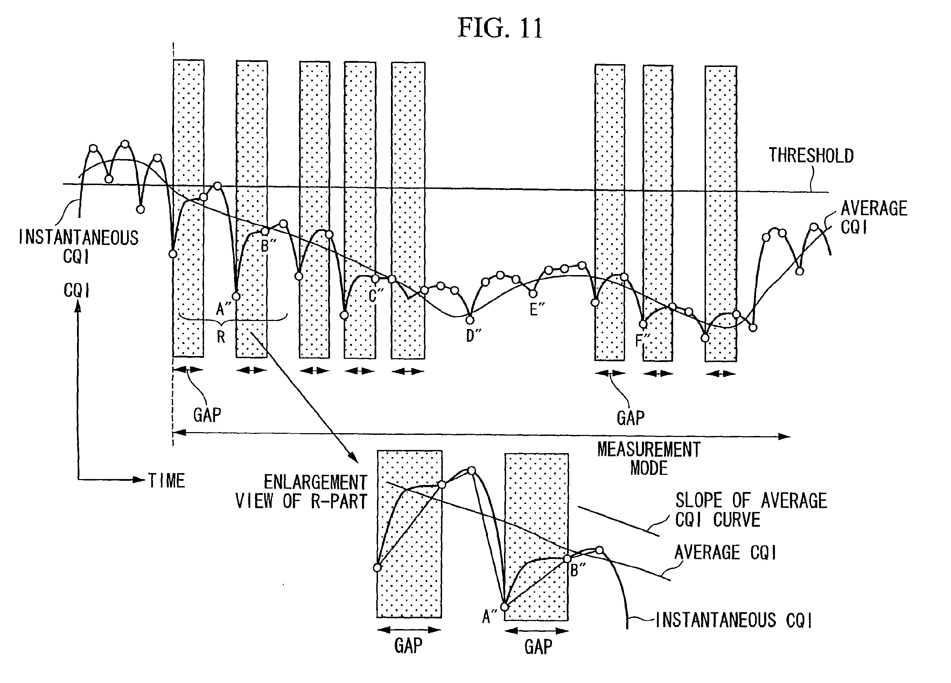

With reference to FIG. 11, the operations of the mobile station device and the base station device according to the present embodiment are explained in detail.
At the time A" and F", the instantaneous CQI is smaller than the average CQI (Se 3 and Sf 3), and the slope of the average CQI curve (Se 5 and Sf 5) and the slope of the instantaneous CQI curve are smaller than zero (Se 6 and Sf 6). As a result, it is determined to be a gap section (Se 7 and Sf 7), and the mobile station device monitors (measures) a base station device of a different frequency in the gap section. The base station device excludes the mobile station device from the scheduling target in the gap section. At the time B" and C", the instantaneous CQI is smaller than the average CQI (Se 3 and Sf 3), the slope of the average CQI curve is smaller than zero (Se 5 and Sf 5), but the slope of the instantaneous CQI curve is positive (Se 6 and Sf 6). As a result, it is determined not to be a gap section, but to be a normal state (Se 4 and Sf 4), and the mobile station device executes downlink monitoring or data reception. The base station device executes scheduling including the target mobile station device. At the time D" and E", the instantaneous CQI is smaller than the average CQI (Se 3 and Sf 3), but the slope of the average CQI curve is positive (Se 5 and Sf 5). As a result, it is determined not to be a gap section, but to be a normal state (Se 4 and Sf 4), and the mobile station device executes downlink monitoring or data reception. The base station device executes scheduling including the target mobile station device.

Thus, the gap determination is executed in consideration of the slope of the average CQI curve and the slope of the instantaneous CQI curve which are the CQI characteristics in addition to the determination based on the comparison of the instantaneous CQI and the average CQI. As a result, the possibility of downlink scheduling being executed in the area where the CQI characteristics are improved increases similarly to the first and the second embodiments. Therefore, deterioration of the throughput with respect to the mobile station device that monitors (measures) a base station device of a different frequency/radio access technology can be prevented.
Although the slope of the average CQI curve is the slope between the previous average CQI and the current average CQI in the present embodiment, the last but one and the last but two average CQIs may be used to execute high dimensional interpolation and to calculate the slope.
Similarly, the slope of the instantaneous CQI curve may be calculated by using the last but one and the last but two instantaneous CQIs in addition to the previous and the current instantaneous CQI and by executing two-dimensional or higher interpolation.

Although the gap control is executed by sharing the information concerning the instantaneous CQI between the base station device and the mobile station device in any of the first to third embodiments, the instantaneous CQI is not always fed back to the base station device since various devices are made with respect to the CQI data compression in view of radio resource economy of the uplink signaling control channel. Therefore, the base station device may calculate the instantaneous CQI from the compressed CQI data, or only the mobile station device may execute the gap control to determine necessity or lack thereof of gap generation by the NM/MM determining unit and the GAP determining unit, and to output the gap section directly to the base station device.

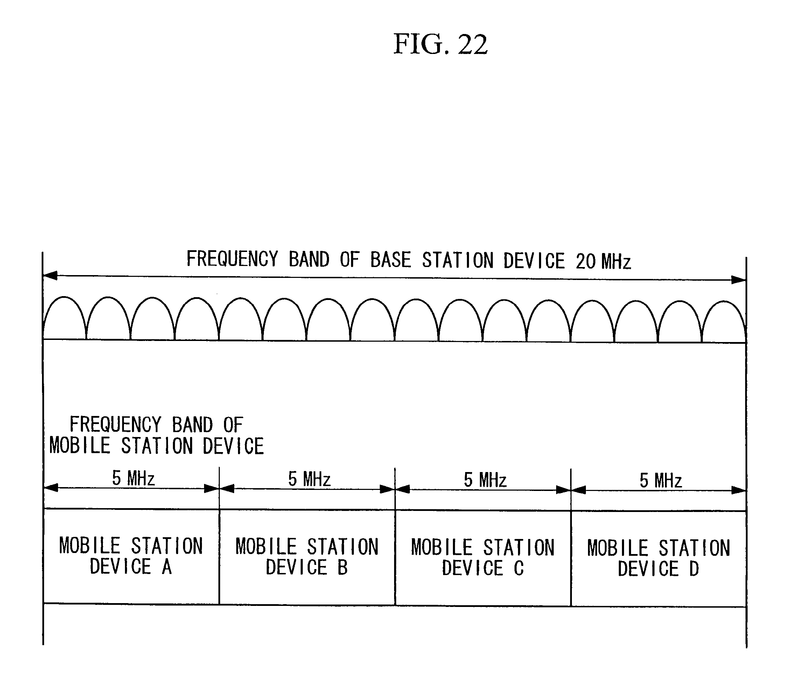

Although the gap control for Intra-RAT-HO (Inter-Freq-HO) and Inter-RAT-HO (Inter-Freq-HO) is assumed in any of the first to third embodiments, mobile station devices utilizing different communication-capacity frequency-bands (e.g., 1.25 MHz, 2.5 MHz, 5 MHz, 10 MHz, 15 MHz, and 20 MHz) can belong to base station devices having different system frequency bands (e.g., 1.25 MHz, 2.5 MHz, 5 MHz, 10 MHz, 15 MHz, and 20 MHz) in EUTRA/EUTRAN. FIG. 22 shows an allocation example of mobile station devices when the system frequency band is 20 MHz, and the frequency band of the mobile station device is 5 MHz. The mobile station device can also execute a gap control for monitoring a frequency different from the frequency allocated to the mobile station device in the same frequency band of the base station device. Specifically, upon generating a gap section, a mobile station A can monitor and measure frequency bands of mobile station devices B, C, and D in the same frequency band of the base station device, notify the base station device of the result, and move to the different frequency in the frequency band of the base station device.

Although FDD (Frequency Division Duplex) is assumed in the radio communication system in the first to third embodiments, TDD (Time Division Duplex) is also applicable.

Each processing unit shown in FIGS. 1, 2, 7, 8, 12, and 13 may be implemented by dedicated hardware, or a memory and a microprocessor.

Although the embodiments of the present invention are explained in detail with reference to the drawings, the configuration is not limited thereto, and different configurations may be used without departing from the scope of the invention.

### INDUSTRIAL APPLICABILITY

The present invention is preferably used in a cellular mobile communication system for a mobile station device, a base station device, and a mobile communication system that execute handover between cells belonging to the same radio access technology or different radio access technologies.

## Claims

1. A mobile station device that includes a mode determining unit that determines two modes that are a normal mode in which the mobile station device is in a normal state of communication with a base station device and a measurement mode in which the mobile station device communicates with the base station device or monitors a base station device to be a handover target, wherein
the mode determining unit determines to set one of the normal mode and the measurement mode based on a channel quality indication threshold and a channel quality indication characteristic at a frequency being used for the communication.

2. The mobile station device according to claim 1, wherein the channel quality indication characteristic is an increasing and decreasing tendency of an average channel quality indication.

3. A base station device that communicates with the mobile station device according to claim 1, comprising:
a mode determining unit that determines whether the mobile station device is in a normal mode or a measurement mode based on a channel quality indication threshold and a channel quality indication characteristic that is calculated from a channel quality indication obtained from the mobile station device during the communication.

4. The base station device according to claim 3, wherein the channel quality indication characteristic is an increasing and decreasing tendency of an average channel quality indication.

5. A mobile station device that sets a gap section for monitoring a base station device to be a handover target, comprising:
a gap determining unit that determines whether or not to set the gap section based on at least channel quality indication characteristics at a frequency being used for communication.

6. The mobile station device according to claim 5, wherein the channel quality indication characteristics are a difference between an instantaneous channel quality indication and an average channel quality indication, and an increasing and decreasing tendency of the average channel quality indication.

7. The mobile station device according to claim 5, wherein the channel quality indication characteristics are increasing and decreasing tendencies of an average channel quality indication and an instantaneous channel quality indication.

8. A base station device comprising:
a gap determining unit that determines whether or not to set a gap section in which transmission to a mobile station device is not executed based on at least channel quality indication characteristics calculated from a channel quality indication obtained from the mobile station device during communication.

9. The base station device according to claim 8, wherein the channel quality indication characteristics are a difference between an instantaneous channel quality indication and an average channel quality indication, and an increasing and decreasing tendency of the average channel quality indication.

10. The base station device according to claim 8, wherein the channel quality indication characteristics are increasing and decreasing tendencies of an average channel quality indication and an instantaneous channel quality.
